# DEMANDE DE BREVET EUROPEEN

(11) **EP 2 019 212 A1**
(43) Date de publication de la demande: **28.01.2009**
(21) Numéro de dépôt: 08380002.9
(22) Date de dépôt: 08.01.2008
(51) Int. Cl.: F16B 12/52, A47B 13/02, F16B 12/40

(54) **Bride/ collier perfectionnée pour l'assemblage de structures de meubles**

(30) Priorité: 26.07.2007 ES 200701601 U
(71) Demandeur: Ziur I, S.L., 20720 Azkoitia (Guipuzcoa) (ES)
(72) Inventeur: Lizarralde Zulaica, Angel, 20720 Azkoitia (Gipuzkoa) (ES)
(74) Mandataire: Urizar Barandiaran, Miguel Angel

(57) **Abrégé**

Bride/collier pérfectionnée pour l'assemblage de structures de meubles, qui se compose de deux pièces-base (1a), (1b) pouvant être placées face à face et comprimées par rapprochement par des moyens (21) pour leur ancrage et leur auto-positionnement mutuels, entourant entre elles, dans leur conjonction, au moins une longrine (I), une traverse (t) et un pied (p) de la structure du meuble ; aussi bien les pièces-base (1a), (1b) que la longrine (I) et la traverse (t) étant munies de jeux de formations conjuguées (31) qui assurent une fixation amovible rigide entre elles, à la suite de l'action desdits moyens d'ancrage et d'auto-positionnement (21).

## Description

L'objet de l'invention est une bride/collier perfectionnée pour l'assemblage de structures de meubles.

Dans l'état actuel de la technique, on connaît déjà divers meubles, modulaires ou pas, dont le le bâti ou l'armature est formé par des longrines, des traverses et/ou des pieds assemblés angulairement (orthogonalement) entre eux. L'assemblage entre ces différents éléments de la structure du meuble a lieu en employant des brides ou des colliers du type de ceuxl qui sont décrits dans, par exemple, les Brevets US4621879, US4702638, DE29809994 et EP1120062 (ce dernier du demandeur lui-même).

Un problème non résolu de façon efficace dans les solutions connues est la rigidité et la polyvalence de l'assemblage: il faut un assemblage très rigide et polyvalent qui présente une structuration simple et aisément maniable afin d'obtenir des montages/démontages rapides, lorsque l'occasion le demande et, simultanément, d'offrir de vastes possibilités d'utilisation permettant des combinaisons/possibilités multiples d'assembler entre eux les éléments qui font partie de la structure du meuble.

La bride-collier qui fait l'objet de l'invention permet les fins proposées avec une configuration simple et rigide, qui comprend deux pièces-base pouvant être mises face à face et comprimées par approche par des moyens pour leur ancrage et auto-positionnement mutuels, comprenant entre elles, dans leur assemblage, au moins une longrine, une traverse et un pied de la structure du meuble, aussi bien les pièces-base que la longrine et la traverse étant munies de jeux de formations conjuguées qui assurent une fixation rigide amovible entre elles, à la suite de l'action desdits moyens d'ancrage et d'auto-positionnement.

C'est pourquoi la bride/collier perfectionnée pour l'assemblage de structures de meubles constitue une invention nouvelle, qui implique une activité inventive et qui est susceptible d'être appliquée industriellement.

Pour mieux comprend l'objet de la présente invention, on représente sur les plans une forme préférentielle de réalisation pratique, susceptible de changements accessoires qui n'en dénaturent pas le fondement. '

La figure 1 représente une vue générale en perspective d'une bride/collier perfectionnée pour l'assemblage de structures de meubles selon l'objet de l'invention avec ses composants en position de montage -figure 1 a- et en position montée -figure 1b-, pour un exemple de réalisation où le pied (p) présente une configuration de révolution.

Les figures 2a et 2b représentent deux vues similaires, respectivement, aux figures 1a et 1b précédentes, pour un exemple de réalisation alternative, où le pied (p') ne présente pas une configuration de révolution.

On décrit ci-dessous un exemple de réalisation pratique, non limitative, de la présente invention.

Conformément à l'invention, la bride/collier perfectionnée pour l'assemblage de structures de meubles se compose de deux pièces pièces-base (1a), (1b) pouvant être mises face à face de façon conjuguée et munies de moyens (21) pour leur ancrage et des moyens (31) pour leur positionnement mutuel.

Dans cette configuration/auto-positionnement, lesdites pièces-base (1a), (1b) entourent entre elles un ou plusieurs éléments qui font partie de la structure d'un meuble : longrine (l), traverse (t) et pieds (p) s'il s'agit, par exemple, de la structure d'une table; longrine (l), traverse (t) et colonne (p) s'il s'agit, par exemple, de la structure d'un support pour étagères.

Pour cela, les pièces-base (1a), (1b) sont munies de jeux de formations conjuguées, aussi bien sur ces piècés-base (1a), (1b) que sur ces éléments (l), (t), (p) de la structure du meuble, de façon à assurer une fixation amovible rigide entre eux, à la suite de l'action des moyens d'ancrage (21) et des moyens de positionnement mutuel (31) mentionnés ci-dessus.

Selon la réalisation représentée, pour configurer ces moyens d'ancrage (21) entre les pièces-base (1a), (1b) et le pied/colonne (p) :
- l'une de ces pièces-base (1a) comporte une protubérance (2a) munie d'un orifice fileté (211) et l'autre pièce-base (1b) comporte un orifice passant (21b) situé positionnellement en face du premier (211), et
- le pied/colonne (p) comporte deux orifices passants (21d) face à face, ou un seul si le pied/colonne (p) est massif.

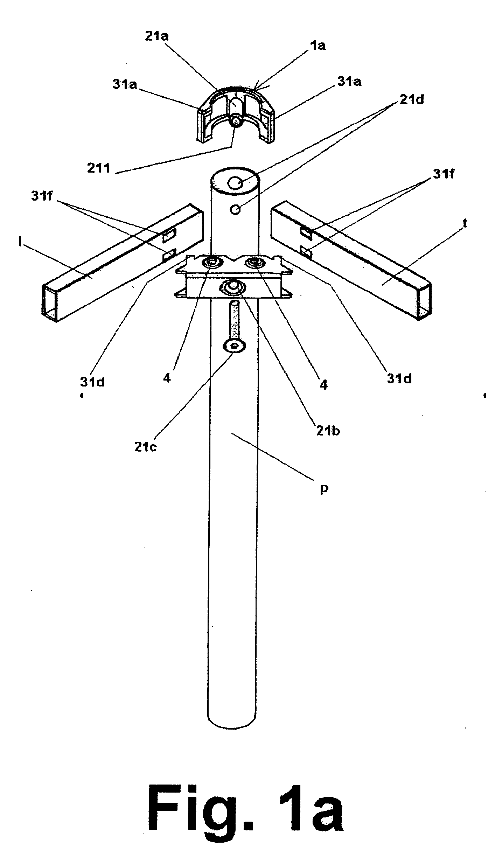

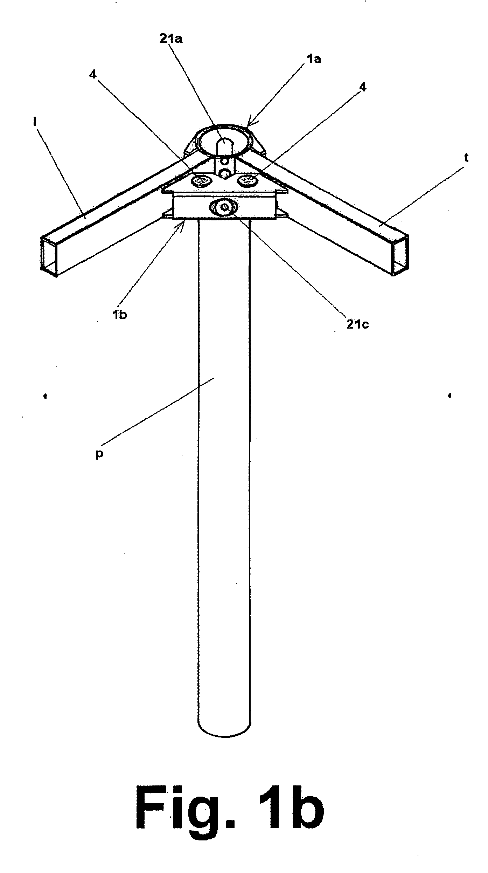

Dans ces orifices (21b), (21d), (211), on dispose une vis (21c) qui, traversant ces orifices (21b), (21d) et se vissant dans cet orifice (211), rapproche les pièces-base (1a), (1b) entre elles en les fixant au pied/colonne (p) et en comprimant entre elles, lors de ce rapprochement, les éléments (l), (t) de la structure du meuble -voir figure 1-.

Selon la réalisation représentée, pour configurer ces moyens de positionnement (31) entre les pièces-base (1a), (1b) et les éléments (l), (t):
- l'une de ces pièces-base (1b) comporte deux paires de protubérances (31d) aux abords extrêmes respectifs-;
- les éléments (l), (t) comportent deux paires de mortaises (31) conjuguées où les premières (31d) viennent se loger.

Le positionnement amovible prétendu est obtenu en comprimant par rapprochement les pièces-base (1a), (1b) avec la vis (21 c), contre les éléments (l), (t), (p), préalablement positionnés face à face -voir figure 1-.

Toutes les réalisations alternatives quelles qu'elles soient n'altérant, ne changeant ou ne modifiant pas le caractère essentiel proposé sont comprises dans l'objet de l'invention, par exemple :

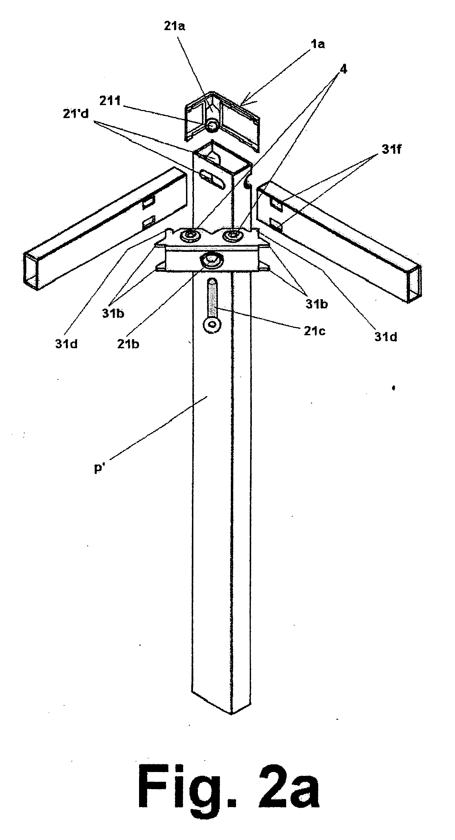

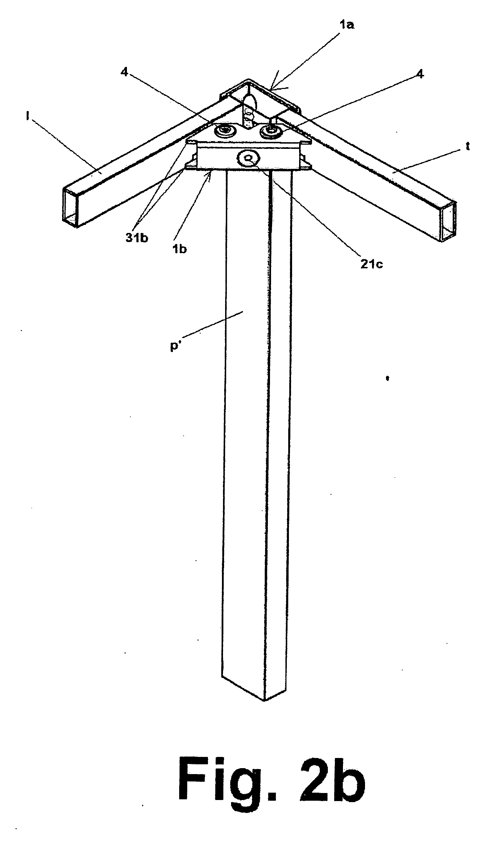

Lorsque le pied/colonne n'est pas un élément de révolution - comme dans la réalisation des figures 2a, 2b- il suffit que la pièce-base (1a) soit asymétrique/conjuguée avec la géométrie du pied/colonne (p) et que les orifices (21'd) y étant réalisés se maintiennent axialement face aux orifices (21b), (211), afin de pouvoir insérer la vis (21c).

Quelle que soit la réalisation, la pièce-base (1a) définit, pour sa part, des rabats (31a) au moyen desquels elle prend appui et se comprime contre les éléments (l), (t) lors de son montage, le reste du corps présentant une structure fine, qui la dote d'une certaine flexibilité.

Quelle que soit la réalisation, il a été prévu d'inclure dans la bride qui fait l'objet de l'invention des moyens ou des formations complémentaires (4), dans le but de contribuer à la fixation d'autres éléments du meuble lui-même, par exemple, le panneau -s'il s'agit d'une table- ou les rayons -s'il s'agit d'une étagère-.

De tels moyens complémentaires (4) peuvent être des moyens quels qu'ils soient (ventouses, orifices pour l'insertion de vis ou similaires) sans altérer pour cela l'essence de l'invention.

## Revendications

1. Bride/collier perfectionnée pour l'assemblage de structures de meubles, **se caractérisant par le fait qu'**elle se compose de deux pièces-base (1a), (1b) pouvant être placées face à face et comprimées par rapprochement par des moyens (21) pour leur ancrage et leur auto-positionnement mutuels, entourant entre elles, dans leur conjonction, au moins, une longrine (l), une traverse (t) et un pied (p) de la structure du meuble ; aussi bien les pièces-base (1a), (1b) que la longrine (l) et la traverse (t) étant munies de formations conjuguées (31) qui assurent une fixation amovible rigide entre elles, à la suite de l'action desdits moyens d'ancrage et d'auto-positionnement (21).

2. Bride/collier perfectionnée pour l'assemblage de structures de meubles, selon la revendication antérieure, **se caractérisant par le fait que** ces moyens d'ancrage et d'auto-positionnement entre les pièces-base (1a), (1b) sont :
a) una protubérance (21a) pourvue d'orifices filetés (211) sur l'une des pièces-base (1a) ;
b) un orifice passant (21b) en face de cet orifice fileté (21a), dans l'autre pièce-base (1b) ;
c) deux orifices passants (21d) dans le pied (p) ;
d) une vis (21c) qui, traversant ces orifices (21b), (21d) et se vissant dans cet orifice (211), rapproche les pièces-base (1a), (1b) entre elles, en comprimant entre elles, lors de ce rapprochement, une longrine (l), une traverse (t) et un pied (p) de la structure du meuble, auto-positionnées préalablement en face de leurs formations conjuguées correspondantes (31d), (31f).

3. Bride/collier perfectionnée pour l'assemblage de structures de meubles, selon les revendications antérieures, **se caractérisant par** le fait, notamment, que la pièce-base (1a) définit des rabats (31a) au moyen desquels elle prend appui et se comprime contre les éléments (l), (t), lors de son montage, le reste du corps présentant une structure fine, qui la dote d'une certaines flexibilité.

4. Bride/collier perfectionnée pour l'assemblage de structures de meubles, selon les revendications antérieures, **se caractérisant par** le fait, additionnellement, que l'une des pièces-base (1b) est pourvue de formations complémentaires (4), dans le but de contribuer à la fixation d'autres éléments du meuble lui-même.

## Revendications modifiées

### Revendications modifiées conformément à la règle 137(2) CBE.

**1.** Bride/collier perfectionnée pour l'assemblage de structures de meubles, que se compose de deux pièces-base (1a), (1b) pouvant être placées face à face et comprimées par rapprochement par des moyens (21) pour leur ancrage et leur auto-positionnement mutuels, entourant entre elles, dans leur conjonction, au moins, une longrine (I), une traverse (t) et un pied (p) de la structure du meuble ; aussi bien les pièces-base (1a), (1b) que la longrine (I) et la traverse (t) étant munies de formations conjuguées (31) qui assurent une fixation amovible rigide entre elles, à la suite de l'action desdits moyens d'ancrage et d'auto-positionnement (21), **se caractérisant par le fait que** ces moyens d'ancrage et d'auto-positionnement entre les pièces-base (1a), (1b) étant a l'experieur du pied (p) sont:
a) una protubérance (21a) pourvue d'orifices filetés (211) sur l'une des pièces-base (1a), dirigée vers l'intérieur du pied (p);
b) un orifice passant (21b) en face de cet orifice fileté (21 a), dans l'autre pièce-base (1b) ;
c) deux orifices passants (21d) dans le pied (p) ;
d) une vis (21c) qui, traversant ces orifices (21b), (21d) et se vissant dans cet orifice (211), rapproche les pièces-base (1a), (1b) entre elles, en comprimant entre elles, lors de ce rapprochement, une longrine (I), une traverse (t) et un pied (p) de la structure du meuble, auto-positionnées préalablement en face de leurs formations conjuguées correspondantes (31 d), (31 f).

**2.** Bride/collier perfectionnée pour l'assemblage de structures de meubles, selon le revendication antérieur, **se caractérisant par** le fait, notamment, que la pièce-base (1a) définit des rabats (31a) au moyen desquels elle prend appui et se comprime contre les éléments (I), (t), lors de son montage, le reste du corps présentant une structure fine, qui la dote d'une certaines flexibilité.

**3.** Bride/collier perfectionnée pour l'assemblage de structures de meubles, selon les revendications antérieures, **se caractérisant par** le fait, additionnellement, que l'une des pièces-base (1b) est pourvue de formations complémentaires (4), dans le but de contribuer à la fixation d'autres éléments du meuble lui-même.
